# EUROPEAN PATENT SPECIFICATION

(11) **EP 3 731 251 B1**
(45) Date of publication and mention of the grant of the patent: **03.09.2025**
(21) Application number: 20171102.5
(22) Date of filing: 23.04.2020
(51) Int. Cl.: H01H 9/16, H05B 47/105, H05B 47/115, H05B 47/12

(54) **SWITCH AND RADAR FOR IN-WALL APPLICATIONS**
SCHALTER UND RADAR FÜR UNTERPUTZANWENDUNGEN
COMMUTATEUR ET RADAR POUR DES APPLICATIONS ENCASTRÉES

(30) Priority: 23.04.2019 BE 201905270
(43) Date of publication of application: 28.10.2020
(73) Proprietor: Niko NV, 9100 Sint-Niklaas (BE)
(72) Inventor: DEVENYN, Diederik, 9820 Merelbeke (BE)
(74) Representative: Calysta NV

(56) References cited:
- WO-A1-2015/129151
- US-A- 5 753 983
- US-A- 6 069 561
- US-A1- 2018 110 114
- US-B1- 6 285 912

## Description

### Technical field of the invention

The present invention relates to advanced switches. More particularly, the present invention relates to an electric or electronic switch module comprising a combination of a switch and a radar sensor for in-wall applications.

### Background of the invention

Wall-mounted switches are widely used in (automatic) control of lighting devices. However, the technology today uses a lot of further technology to control such lighting devices, such as, for example, sensors. Especially radar sensors may be of advantageous use, because radar sensors can provide invisible presence detection, and certain types of radar sensors are able to detect presence, speed, movement direction and exact object position. Also differentiation between large and small (micro) object movements can be done with radar sensors. Hence, radar sensors can add useful information for controlling electric or electronic devices.

CN 205897060 describes an electrical box wall switch using radar sensing technology (see Figs. 1a, 1b and 2). The wall switch comprises a panel 1 with a PVC protection sticker 2 and a front housing 3. A connector 4 connects the front housing 3 with a circuit board 5, which is connected to the back cover 6. The circuit board 5 is provided with a microwave antenna amplifier 7, an analog-to-digital signal conversion control module 8 and a voltage stabilizing bias module 9, which are all electrically connected. The voltage stabilizing bias module 9 is further electrically connected to an auxiliary power source 10, and the analog-to-digital conversion control module 8 and the auxiliary power source 10 are electrically connected to the switch 11. The switch 11 is connected to the AC output line 12 and a controller 13. The microwave antenna amplifier 7 and a light control circuit 14 and a planar microwave antenna 15 are also electrically connected.

Beneficial effects of the wall switch described in CN 205897060 are that, when the ambient light is higher than a predetermined threshold, the wall switch will not work. When the ambient light becomes less than the predetermined threshold, the wall switch will enter in a working state. When someone approaches the device, the signal of the planer microwave antenna 15 is triggered. The planar microwave antenna 15 senses that someone is approaching and the signal is amplified by the microwave antenna amplifier 7 and transmitted to the antenna 15. The analog-to-digital signal conversion control module 8 controls the high potential output of the switch to turn on. After the person leaves, the analog-digital signal conversion control module control signal becomes low and the output is turned off. The wall switch adopts a combination scheme of radar sensing technology and light control switch.

CN 205897060 thus describes a sensor with a switching element, there is no real switch function and there is no switch button. When the sensor detects a movement, the switching element is activated for controlling a lighting device. However, the switch cannot be controlled, and the lighting device can thus not be put on or off, by a user pushing the switch button. The lighting device can only be turned on or off on the basis of input from the sensor. US 2018/110114 describes a faceplate remote control device that can be attached to a wall-mounted mechanical light switch that has a toggle actuator, thereby replacing a standard faceplate. The faceplate remote control device may be configured to maintain free operation of the toggle actuator of the mechanical switch when the faceplate remote control device is attached to the mechanical switch. The mechanical switch may comprise a yoke that allows the mechanical switch to be mounted to a standard electrical wallbox, for example by using one or more mounting screws. An adapter plate of the faceplate remote control device may be configured to then be attached to the yoke of the mechanical switch, for example via one or more attachment screws. The faceplate remote control comprises a housing that defines an opening, wherein an actuator of the wall mounted light switch is configured to protrude through the opening. The faceplate remote control further comprises a user interface integrated with the housing and configured to receive an input from a user of the remote control device. Further, a control circuit is provided for detecting an operation of the actuator of the wall-mounted light switch. Further, the faceplate remote control comprises a wireless communication circuit configured to transmit a message to the lighting control device in response to one of the detection of the operation of the actuator or receiving input from the user interface.

The faceplate remote control device may further include a sensing device that is configured to provide automated control of a lighting load that is controlled by a load control device that is associated with the faceplate remote control device. The sensing device may be mounted to the printed circuit board, for example, and the microprocessor may be configured to cause the wireless communication circuit to transmit one or more messages to the load control device in response to the sensing device. The faceplate remote control device may further comprise a battery. Further, the faceplate remote control devices may comprise one or more other power sources, for instance in addition to, or in lieu of, the battery. For example, the faceplate remote control device may include a solar cell or photovoltaic coating, such as a photovoltaic film, that may be displaced on (e.g., attached to) one or more surfaces (e.g., exterior surfaces) of the housing of the faceplate remote control device.

In US 2018/110114, the switching element, i.e. the toggle actuator, does not form part of the faceplate remote control device. Further, some existing sensing element(s), such as e.g. radar sensors, can consume a lot of energy for which the battery is too small, as only a small battery can be included because of the limited space. Also, there is not much space left to provide enough additional power sources to make the faceplate remote control device work properly. Hence, a faceplate remote control device is limited in the type of sensing devices that can be used with it. WO 2015/129151 A1 discloses an electric or electronic switch module according to the preamble of claim 1.

### Summary of the invention

It is an object of embodiments of the present invention to provide a combination of a switch and a radar sensor for in-wall applications.

The above objective is accomplished by a device according to claim 1.

The present invention provides an electric or electronic switch module for triggering the start of an action of or for controlling an electric or electronic device. The electric or electronic switch module comprises a housing with a housing cover, an actor module comprising at least a power source for powering the electric or electronic switch module and comprising a switching element, and a sensor module comprising at least one radar sensor and at least a switch function for activating the switching element on the actor module, the actor module and the sensor module being provided in the housing and being electrically connected to each other. The electric or electronic switch module furthermore comprises a switch button for activating the switch function.

An advantage of an electric or electronic switch module according to embodiments of the invention is that it combines input from at least two sensors, i.e. a radar sensor and a switch, to increase presence detection robustness by allowing multiple functions/actions by activating the at least two sensors.

A further advantage is that an existing, classical switch can easily be converted into an electric or electronic switch module, thereby keeping the wiring in the wall as it was. Hence, an electric or electronic switch module according to embodiments of the invention is advantageous for being used in retro-fitting.

Still a further advantage of an electric or electronic device module according the invention is that it still comprises a switch button. This is because the actor module comprises both a power source and a switching element, e.g. relay. Hence, the radar sensor can act completely independent of the switch function and can thus be used for controlling a different function, namely another electric or electronic device that is part of a home automation system.

Hence, in an electric or electronic switch module according to embodiments of the invention comprises at least a switch function and a radar sensor in a compact space of a classical switch. Again, this makes an electric or electronic switch module according to embodiments of the invention suitable for being used in retro fitting, because it can easily replace such a classical switch without having to change too much to the electrical installation and the wiring.

According to embodiments of the invention, the actor module and the sensor module may be provided on a same PCB.

According to other embodiments, the actor module may be provided on an actor PCB and the senor module may be provided on a sensor PCB, the actor PCB and the sensor PCB being different PCBs. An isolator sheet may be provided in between the actor PCB and the sensor PCB.

The actor module may furthermore comprise a processor, the processor being adapted for sending a signal to the electric or electronic device for starting an action as a result of a signal received from the switch button and/or the at least one radar sensor.

Hence, starting an action of the electric or electronic device may be done by pushing the switch function and/or by a detection of the at least one radar sensor.

The switch function can still be used independently of the radar sensor. The way the electric or electronic switch module is programmed, will determine whether the switch button has to be pushed to start an action, e.g. lights on/off, light dimmed, roller blades up/down, etc., or whether the start of an action is triggered by a detection of the radar sensor .

The actor module and the sensor module may, according to embodiments of the invention, be removably connected by means of a removable cable.

According to embodiments of the invention, the electric or electronic switch module may be a standalone module. According to such embodiments, the switching element may be a relay that is provided on the actor module.

According to other embodiments, the electric or electronic switch module may be part of a home automation system. According to these embodiments, the switching element may be a bus connection that is provided on a remote location.

The electric or electronic switch module may furthermore comprises a communication interface for communicating with other devices in the home automation system.

The housing cover comprises a flexible lever for transferring a push on the switch button to the switch function on the sensor module.

The actor module may further comprise a dimming function or the like.

The sensor module may further comprise at least one additional sensor, such as for example, at least one of a PIR, a movement sensor, an acoustic sensor, a VOC sensor, a light measurement sensor, a temperature sensor or the like.

The electric or electronic switch module may furthermore comprises a wall frame for fixing the electric or electronic switch module to a wall, and wherein the housing is connected to the wall frame by means of screws, a click mechanism or the like.

The electric or electronic switch module may furthermore comprising a cover plate for finishing the electric or electronic switch module.

According to embodiments of the invention, the electric or electronic switch module may furthermore comprise an antenna providing a wireless connection for adding, for example, additional sensors and/or actors and/or a connection with a home automation system.

According to embodiments of the invention, the electric or electronic switch module may furthermore comprise external button inputs. Additional switching inputs can be combined or each switching point could be seen as an individual sensor input.

### Brief description of the drawings

It has to be noted that same reference signs in the different figures refer to same, similar or analogous elements.

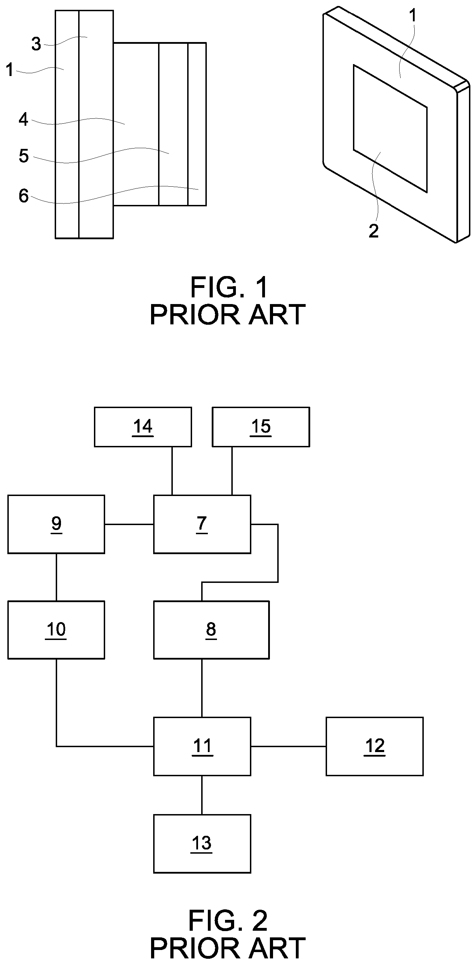

Figs. 1a, 1b and 2 illustrate a radar switch according to the prior art.
Fig. 3 schematically shows an exploded view of an electric or electronic switch module according to embodiments of the invention.
Fig. 4 schematically shows an exploded view of an electric or electronic switch module according to embodiments of the invention.
Fig. 5 schematically illustrates an actor module that can be used in an electric or electronic switch module according to embodiments of the invention.
Fig. 6 schematically illustrates a sensor module that can be used in an electric or electronic switch module according to embodiments of the invention.
Fig. 7 schematically illustrates a front view (Fig. 7a), a back view (Fig. 7b) and a side view (Fig. 7c) of an electric or electronic switch module according to embodiments of the invention with a cover plate.
Fig. 8 schematically illustrates a back side of a housing of an electric or electronic switch module according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

The present invention provides an electric or electronic switch module for triggering the start of an action of an electric or electronic device. The electric or electronic switch module comprises a housing with a housing cover, an actor module comprising at least a power source for powering the electric or electronic switch module and comprising a switching element, and a sensor module comprising at least one radar sensor and at least a switch function for activating the switching element on the actor module, the actor module and the sensor module being provided in the housing and being electrically connected to each other.

The electric or electronic switch module furthermore comprises a switch button for activating the switch function.

An advantage of an electric or electronic switch module according to embodiments of the invention is that it combines input from at least two sensors, i.e. a radar sensor and a switch, to increase presence detection robustness by allowing multiple functions/actions by activating the at least two sensors.

A further advantage is that an existing, classical switch can easily be converted into an electric or electronic switch module, thereby keeping the wiring in the wall as it was. Hence, an electric or electronic switch module according to embodiments of the invention is advantageous for being used in retro-fitting.

Still a further advantage of an electric or electronic device module according to embodiments of the invention is that it still comprises a switch button. This is because the actor module of an electric or electronic switch module according to embodiments of the invention comprises both a power source and a switching element, e.g. relay. Hence, the radar sensor can act completely independent of the switch function and can thus be used for controlling a different function, namely another electric or electronic device that is part of a home automation system.

Hence, in an electric or electronic switch module according to embodiments of the invention comprises at least a switch function and a radar sensor in a compact space of a classical switch. Again, this makes an electric or electronic switch module according to embodiments of the invention suitable for being used in retro fitting, because it can easily replace such a classical switch without having to change too much to the electrical installation and the wiring.

The present invention will hereinafter be described by means of different embodiments. It has to be understood that these embodiments are only for the ease of understanding the invention and are not intended to limit the invention in any way.

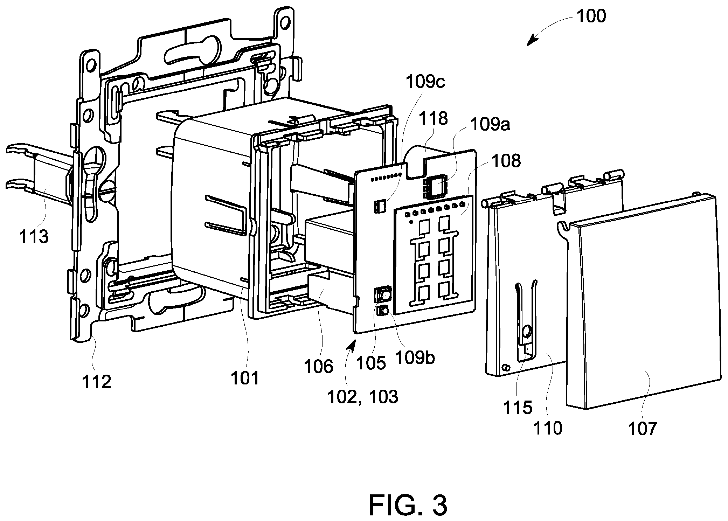

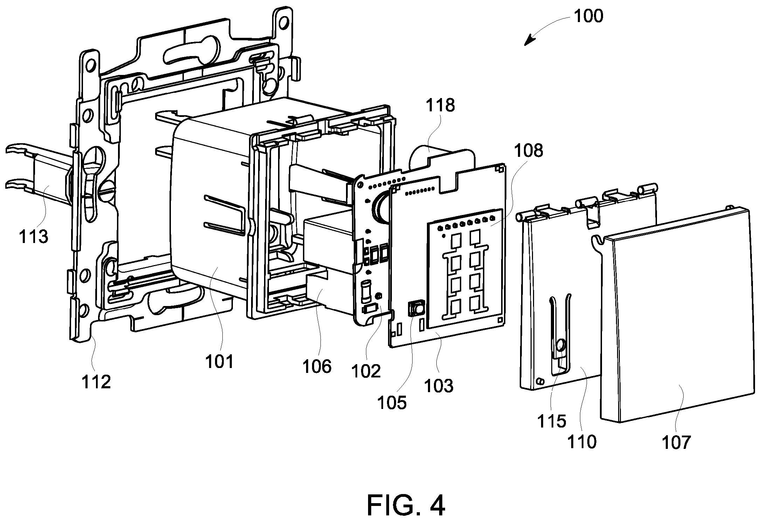

Figs. 3 and 4 schematically illustrate an exploded view of an electric or electronic switch module 100 according to embodiments of the invention. The electric or electronic switch module 100 comprises a housing 101, an actor module102 and a sensor module 103. The actor module 102 and the sensor module 103 are provided in the housing 101 and are electrically connected to each other.

According to embodiments of the invention, the actor module 102 and the sensor module 103 may be provided on a same PCB (see Fig. 3). An advantage of combining the actor module 102 and the sensor module 103 on one PCB is that a space-reduced assembly, i.e. an assembly with reduced thickness, is obtained which results in a limited installation depth for in-wall mounting.

According to other embodiments, the actor module 102 may be provided on an actor PCB and the sensor module 103 may be provided on a sensor PCB, whereby the actor PCB and the sensor PCB are two different PCBs. According to such embodiments, an insulator sheet may be provided in between the actor PCB and the sensor PCB. Such insulator sheet may, for example, be made out of polyimide (e.g. Kapton^{®}), polyethylene terephthalate (e.g. Mylar^{®}), polyethylene or the like.

In case of two PCBs, the actor module or actor PCB 102 and the sensor module or sensor PCB 103 may electrically and removably be connected to each other. With removably connected is meant that the power PCB 102 and the sensor PCB 103 are connected such that they can, at any time, be disconnected from each other without breaking or damaging them. For this purpose the power PCB 102 and the sensor PCB 103 may, for example, be connected by means of a removable cable.

Because the actor module or PCB 102 and the sensor module or PCB 103 are removably connected to each other, they can easily be replaced whenever required and without breaking or being damaged. Indeed, if, for example, one of the actor module or PCB 102 or sensor module or PCB 103 needs to be replaced, it can easily be removed or disconnected from the other PCB 102,103 and the new PCB 103,102 can then easily be connected to the other PCB 102,103.

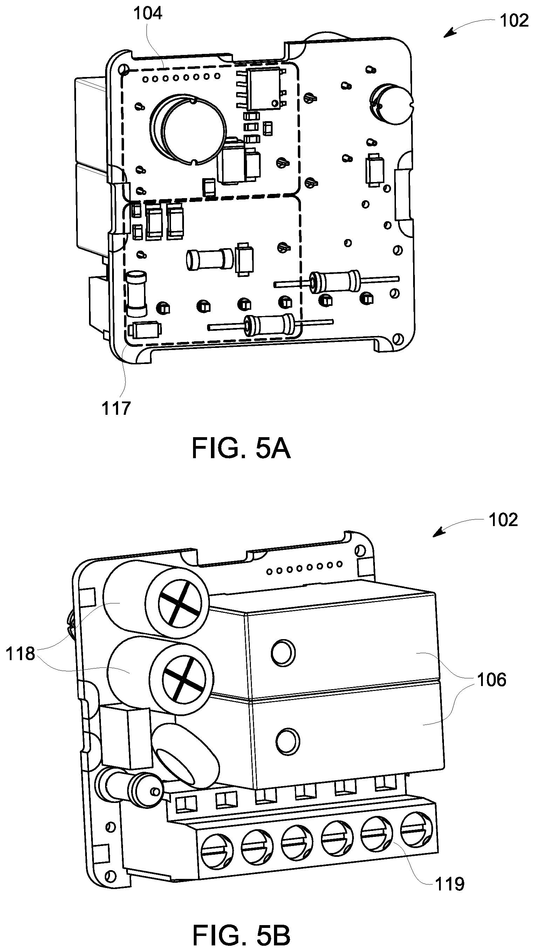

The actor module 102, which is illustrated in detail in Fig. 5A (front side) and Fig. 5B (back side), comprises at its back side, a switching element 106. At its front side, the actor module 102 comprises at least a power source or power supply 104 for powering the electric or electronic switch module 100 and an external push button input 117 which is connected to the switching element 106 at the back side of the actor module 102. The switching element 106 may, for example and as in the example given in Fig. 5B, be a relay 106. At its back side, the actor module 102 may further comprise power supply filters 118 and a connector 119. The actor module 102 may furthermore comprise further electric or electronic elements, such as for example a dimming function (not shown) for, in case the electric or electronic device is a lighting device, dimming the lighting device (not shown), or the like.

The actor module 102 comprising at least both a power source or power supply 104 and a switching element 106 has as an advantage that the radar sensor can act completely independent of the switch function and can thus be used for controlling a different function, namely another electric or electronic device that is part of a home automation system.

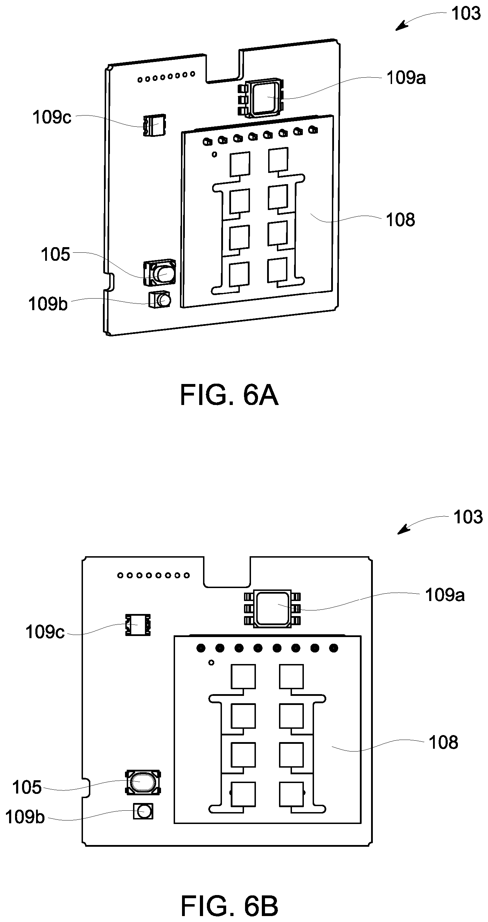

The sensor module103, which is illustrated in detail in Fig. 6A (front side) and Fig. 6B (back side), comprises, at its front side, a switch function 105 for controlling a lighting device, i.e. turning the lighting device on and off. The switch function 105 serves for activating the switching element 106 on the actor module, such as e.g. a relay (see Fig. 5B) or a bus connection as a result of a push on a switch button 107, which is also part of the electric or electronic switch module 100 (see Fig. 3 and Fig. 4). The switch button 107 is thus for activating the switch function 105 on the sensor module 103. Further, the sensor module 103 comprises at least one radar sensor 108. The radar sensor 108 serves for detecting the presence of a person in an area, e.g. room, in a building.

The sensor module 103 may, according to embodiments of the invention, furthermore comprise at least one further sensor 109, such as for example at least one of a PIR sensor 109a, a movement sensor (not shown), an acoustic sensor (not shown), a VOC sensor (not shown), a light measurement sensor 109b, a temperature senor 109c or the like. It has to be understood that Fig. 6A and Fig. 6B are only for the purpose of illustrating the invention and are not intended to limit the invention in any way. According to embodiments of the invention, the sensor module 103 may, next to the at least one radar sensor 108, comprise any number and any combination of other sensors 109.

According to preferred embodiment of the invention, the sensor module 103 may preferably be located in front of the actor module 102. Or in other words, as can be seen in Fig. 3, first the actor module 102 is provided in the housing 101 and then the sensor module 103 may be provided in the housing 101. The sensor module 103 is in this case thus located closest to the front of electric or electronic switch module 100. This is because, as clear for a person skilled in the art, the at least one radar sensor 108 may preferably be so positioned in the electric or electronic switch module 100, such that its radar wave beam is not obstructed by other parts of the electric or electronic switch module 100. Therefore, the at least one radar sensor 108, and thus the sensor module 103, may be positioned close to the front part of the switch module 100 while other electric or electronic elements, and thus the actor module 102, are preferably positioned more to the back of the switch module 100. However, this is not necessarily so, according to other embodiments, the at least one radar sensor 108, and thus the sensor module 103, may also be positioned more in the back of the switch module 100 while other electric or electronic elements, and thus the actor module 102, of the switch module 100 may be positioned more to the front, as long as the radar wave beam is not obstructed by these other electric or electronic elements.

The electric or electronic switch module 100 may furthermore comprise a housing cover 109 for protecting the actor module 102 and the sensor module 103. The housing cover 110 may be provided in front of the sensor module 103, in embodiments as illustrated in Figs. 3 and 4 where the sensor module 103 is positioned in front of the actor module 102, and may be located between the sensor module 103 and the switch button 107 for activating the switch function 105. the housing cover 110 comprises a flexible lever 115 for transferring a push on the switch button 107 to the switch function 105 on the sensor module 103.

According to embodiments of the invention, the actor module 102 may furthermore comprise a processor 111, the processor 111 being adapted for sending a signal to the electric or electronic device for starting an action as a result of a signal received from the switch button 107 and/or the at least one radar sensor 108. Hence, according to embodiments of the invention, the processor 111 may be adapted for sending a signal to the electric or electronic device, such as a lighting device, shutters, an HVAC system, ... for starting an action as a result of a signal received from the switch button 110 and/or the at least one radar sensor 107.

The electric or electronic switch module 100 may furthermore comprise a wall frame 112 for fixing the electric or electronic switch module 100 to a wall. The housing 101 may be connected to the wall frame 112 by means of screws, a click mechanism or the like. Further, fixing claws 113 may be provided to fix the electric or electronic switch module 100 in a mounting box (not shown) in a wall.

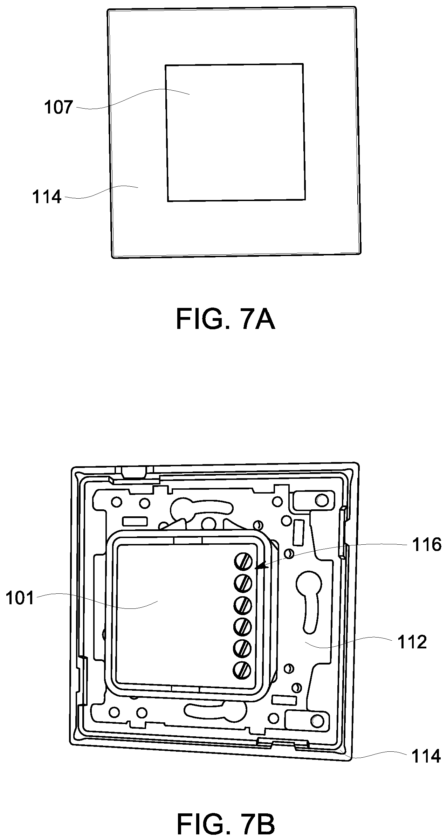

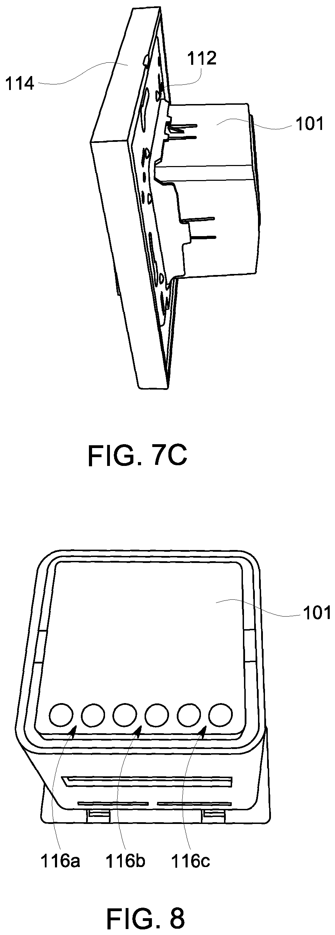

When the electric or electronic device 100 is provided in the wall and is fixed with the wall frame 112, a cover plate 114 may be provided to finish it. An electric or electronic switch module 100 with a cover plate 114 (but not fixed to a wall) is schematically illustrated in Fig. 7. As a radar sensor has the property of detecting through materials, this cover plate 114 may be made out of any suitable material. An advantage hereof is that the radar sensor is invisible to a user and a user only sees a classical switch.

A back side of the housing 101 of the electric or electronic switch module 100 according to embodiments of the invention may comprise three pairs 116a, 116b, 116c of input holes which, with respect to location, correspond to the connector 119 on the back side of the actor module 102, as is illustrated in Fig. 8. A first pair 116a of holes is for being connected to the net, i.e. to 230V, which provides the possibility to the electric or electronic switch module 100 to be used as a stand alone device. A second pair 116b of holes is for being connected to a bus connection, which provides the possibility to the electric or electronic switch module 100to be used as part of a home automation system. The third pair 116c of holes may be an extra pair of input holes, such as push button input holes, alternating switch input holes or crossbar switch input holes.

An electric or electronic switch module 100 according to embodiments of the invention can be a stand-alone device module or can be configured to be part of an automation system for residential buildings, offices, schools or hospitals.

When the electric or electronic switch module 100 is a stand-alone device, the switching element 106 may be a relay provided on the actor module 102. Where the electric or electronic switch module is part of a home automation system, the switching element 106 may be a bus connection that is provided on a remote location. Further, when the electric or electronic switch module is part of a home automation system, the electric or electronic switch module 100 may furthermore comprise a communication interface for communicating with other devices in the home automation system.

In case of a stand-alone device, the signal from the processor 111 may be directly sent to an electric or electric device, such as for example a lighting device, shutters, an HVAC system or the like. The resulting action can then be that, after a person has pushed the switch button 107, a lighting device is switching on or off, or shutters go up or down, or an HVAC system is turned on, or any other similar action that can be triggered by pushing a switch button 107. The same can happen when the at least one radar sensor 108 detects the presence of a person in, for example, a room of a building. For example, in such case, upon detecting a person in the room, a lighting device may be turned on or off, shutters may go up or down, an HVAC system is turned on, or any other similar action that can be triggered upon detecting the presence of a person.

In case where the electric or electronic switch module 100 is part of a home automation system, the signal from the processor 111 may be to the home automation system, for example wireless or over a bus connection, so as to control or start an action of an electric or electronic device that is also part of the home automation system. Similar actions as described for the stand-alone switch module may be thereby triggered and started. The bus connection may, according to embodiments of the invention, be provided on the power PCB.

## Claims

1. An electric or electronic switch module (100), for in-wall mounting, for triggering the start of an action of an electric or electronic device, the electric or electronic switch module (100) comprising:
- a housing (101) with a housing cover (110),
- an actor module (102),
- a sensor module (103) comprising at least one sensor (108) and at least a switch function (105) for activating a switching element (106) on the actor module (102), and
- a switch button (107) for activating the switch function (105),
wherein the actor module (102) and the sensor module (103) are provided in the housing (101) and are electrically connected to each other,
wherein:
- the actor module (102) comprises at least a power source (104) for powering the electric or electronic switch module (100), and the switching element (106),
- the switch function (105) in the sensor module (106) is for activating the switching element (106) on the actor module (102) and
- the housing cover (110) comprises a flexible lever (115) for transferring a push on the switch button (107) to the switch function (105) on the sensor module (103),
**characterized in that**
- the sensor is a radar sensor (108),
- and **in that** the radar sensor is configured to act completely independent of the switch function wherein the radar sensor is used for controlling a different function than the switch function, the different function being another electric or electronic device.

2. An electric or electronic switch module (100) according to claim 1, wherein a back side of the housing (101) of the electric or electronic switch module (100) comprises three pairs (116a, 116b, 116c)of input holes which, with respect to location, correspond to holes in the connector (119) on a back side of the actor module (102).

3. Electric or electronic switch module (100) according to claim 1 or 2, wherein the actor module (102) and the sensor module (103) are provided on a same PCB.

4. Electric or electronic switch module (100) according to claim 1 or 2, wherein the actor module (102) is provided on an actor PCB and wherein the senor module (103) is provided on a sensor PCB, the actor PCB and the sensor PCB being different PCBs.

5. Electric or electronic switch module (100) according to claim 4, wherein an insulator sheet is provided in between the actor PCB and the sensor PCB.

6. Electric or electronic switch module (100) according to any of claims 4 or 5, wherein the actor module (102) and the sensor module (103) are removably connected by means of a removable cable.

7. Electric or electronic switch module (100) according to any of the previous claims, wherein the actor module (102) furthermore comprising a processor (111), the processor (111) being adapted for sending a signal to the electric or electronic device for starting an action as a result of a signal received from the switch button (107) and/or the at least one radar sensor (108).

8. Electric or electronic switch module (100) according to any of the previous claims, wherein the electric or electronic switch module (100) is a standalone module.

9. Electric or electronic switch module (100) according to claim 8, wherein the switching element (106) is a relay that is provided on the actor module (102).

10. Electric or electronic switch module (100) according to any of the previous claims, wherein the electric or electronic switch module (100) is part of a home automation system.

11. Electric or electronic switch module (100) according to claim 10, wherein the electric or electronic switch module (100) furthermore comprises a communication interface on the actor module (102) for communicating with other devices in the home automation system.

12. -Electric or electronic switch module (100) according to any of the previous claims, wherein the actor module (102) further comprises a dimming function or the like.

13. -Electric or electronic switch module (100) according to any of the previous claims, wherein the sensor module (103) further comprises at least one additional sensor (109).

14. -Electric or electronic switch module (100) according to any of the previous claims, furthermore comprising a wall frame (112) for fixing the electric or electronic switch module (100) to a wall, and wherein the housing (101) is connected to the wall frame (112) by means of screws, a click mechanism or the like.

## Patentansprüche

1. Elektrisches oder elektronisches Schaltmodul (100) zur Unterputzmontage zum Auslösen des Beginns einer Aktion einer elektrischen oder elektronischen Vorrichtung, wobei das elektrische oder elektronische Schaltmodul (100) umfasst:
- ein Gehäuse (101) mit einer Gehäuseabdeckung (110),
- ein Aktuatormodul (102),
- ein Sensormodul (103) mit mindestens einem Sensor (108) und mindestens einer Schaltfunktion (105) zum Aktivieren eines Schaltelements (106) am Aktuatormodul (102), und
- eine Schalttaste (107) zum Aktivieren der Schaltfunktion (105),
wobei das Aktuatormodul (102) und das Sensormodul (103) in dem Gehäuse (101) vorgesehen und elektrisch miteinander verbunden sind, wobei:
- das Aktuatormodul (102) mindestens eine Stromquelle (104) zur Stromversorgung des elektrischen oder elektronischen Schaltmoduls (100) und des Schaltelements (106) umfasst,
- die Schaltfunktion (105) im Sensormodul (106) zur Aktivierung des Schaltelements (106) am Aktuatormodul (102) dient und
- die Gehäuseabdeckung (110) einen flexiblen Hebel (115) umfasst, um einen Druck auf den Schaltknopf (107) auf die Schaltfunktion (105) am Sensormodul (103) zu übertragen, **dadurch gekennzeichnet, dass**
- der Sensor ein Radarsensor (108) ist,
- und dass der Radarsensor so konfiguriert ist, dass er völlig unabhängig von der Schaltfunktion arbeitet, wobei der Radarsensor zur Steuerung einer anderen Funktion als der Schaltfunktion verwendet wird, wobei die andere Funktion eine andere elektrische oder elektronische Vorrichtung ist.

2. Elektrisches oder elektronisches Schaltmodul (100) nach Anspruch 1, wobei eine Rückseite des Gehäuses (101) des elektrischen Schaltmoduls (100) drei Paare (116a, 116b, 116c) der Eingangsöffnungen umfasst, die hinsichtlich ihrer Lage Öffnungen im Verbinder (119) auf einer Rückseite des Aktuatormoduls (102) entsprechen.

3. Elektrisches oder elektronisches Schaltmodul (100) nach Anspruch 1 oder 2, wobei das Aktuatormodul (102) und das Sensormodul (103) auf einer gleichen Leiterplatte vorgesehen sind.

4. Elektrisches oder elektronisches Schaltmodul (100) nach Anspruch 1 oder 2, wobei das Aktuatormodul (102) auf einer Aktuatorleiterplatte und das Sensormodul (103) auf einer Sensorleiterplatte vorgesehen sind, wobei die Aktuatorleiterplatte und die Sensorleiterplatte unterschiedliche Leiterplatten sind.

5. Elektrisches oder elektronisches Schaltmodul (100) nach Anspruch 4, wobei eine Isolierfolie zwischen der Aktuatorleiterplatte und der Sensorleiterplatte vorgesehen ist.

6. Elektrisches oder elektronisches Schaltmodul (100) nach einem der Ansprüche 4 oder 5, wobei das Aktuatormodul (102) und das Sensormodul (103) mittels eines abnehmbaren Kabels lösbar verbunden sind.

7. Elektrisches oder elektronisches Schaltmodul (100) nach einem der vorherigen Ansprüche, wobei das Aktuatormodul (102) ferner einen Prozessor (111) umfasst, wobei der Prozessor (111) zum Senden eines Signals an die elektrische oder elektronische Vorrichtung zum Starten einer Aktion als Ergebnis eines Signals ausgelegt ist, das von dem Schalterknopf (107) und/oder dem mindestens einen Radarsensor (108) empfangen wird.

8. Elektrisches oder elektronisches Schaltmodul (100) nach einem der vorstehenden Ansprüche, wobei das elektrische oder elektronische Schaltmodul (100) ein eigenständiges Modul ist.

9. Elektrisches oder elektronisches Schaltmodul (100) nach Anspruch 8, wobei das Schaltelement (106) ein Relais ist, das auf dem Aktuatormodul (102) vorgesehen ist.

10. Elektrisches oder elektronisches Schaltmodul (100) nach einem der vorhergehenden Ansprüche, wobei das elektrische oder elektronische Schaltmodul (100) Teil eines Hausautomatisierungssystems ist.

11. Elektrisches oder elektronisches Schaltmodul (100) nach Anspruch 10, wobei das elektrische oder elektronische Schaltmodul (100) ferner eine Kommunikationsschnittstelle auf dem Aktuatormodul (102) umfasst, um mit anderen Vorrichtungen im Hausautomatisierungssystem zu kommunizieren.

12. Elektrisches oder elektronisches Schaltmodul (100) nach einem der vorherigen Ansprüche, wobei das Aktuatormodul (102) ferner eine Dimmfunktion oder dergleichen umfasst.

13. Elektrisches oder elektronisches Schaltmodul (100) nach einem der vorherigen Ansprüche, wobei das Sensormodul (103) ferner mindestens einen zusätzlichen Sensor (109) umfasst.

14. Elektrisches oder elektronisches Schaltmodul (100) nach einem der vorherigen Ansprüche, das ferner einen Wandrahmen (112) zum Befestigen des elektrischen oder elektronischen Schaltmoduls (100) an einer Wand umfasst, und wobei das Gehäuse (101) mittels Schrauben, einem Klickmechanismus oder dergleichen mit dem Wandrahmen (112) verbunden ist.

## Revendications

1. Module de commutation électrique ou électronique (100), pour montage encastré, destiné à déclencher le début d'une action d'un dispositif électrique ou électronique, le module de commutation électrique ou électronique (100) comprenant :
- un boîtier (101) avec un couvercle de boîtier (110),
- un module d'actionnement (102),
- un module de capteur (103) comprenant au moins un capteur (108) et au moins une fonction de commutation (105) pour activer un élément de commutation (106) sur le module d'actionnement (102), et
- un bouton de commutation (107) pour activer la fonction de commutation (105),
dans lequel le module d'actionnement (102) et le module de capteur (103) sont prévus dans le boîtier (101) et sont raccordés électriquement l'un à l'autre, dans lequel :
- le module d'actionnement (102) comprend au moins une source de puissance (104) pour alimenter le module de commutation électrique ou électronique (100), et l'élément de commutation (106),
- la fonction de commutation (105) dans le module de capteur (106) est destinée à activer l'élément de commutation (106) sur le module d'actionnement (102) et
- le couvercle de boîtier (110) comprend un levier flexible (115) pour transférer une pression sur le bouton de commutation (107) à la fonction de commutation (105) sur le module de capteur (103), **caractérisé en ce que**
- le capteur est un capteur radar (108),
- et **en ce que** le capteur radar est configuré pour agir de manière totalement indépendante de la fonction de commutation, dans lequel le capteur radar est utilisé pour commander une fonction différente de la fonction de commutation, la fonction différente étant un autre dispositif électrique ou électronique.

2. Module de commutation électrique ou électronique (100) selon la revendication 1, dans lequel une face arrière du boîtier (101) du module de commutation électrique (100) comprend trois paires (116a, 116b, 116c) d'orifices d'entrée qui, en ce qui concerne l'emplacement, correspondent à des orifices dans le connecteur (119) sur une face arrière du module d'actionnement (102).

3. Module de commutation électrique ou électronique (100) selon la revendication 1 ou 2, dans lequel le module d'actionnement (102) et le module de capteur (103) sont prévus sur une même carte de circuit imprimé.

4. Module de commutation électrique ou électronique (100) selon la revendication 1 ou 2, dans lequel le module d'actionnement (102) est prévu sur une carte de circuit imprimé d'actionnement et dans lequel le module de capteur (103) est prévu sur une carte de circuit imprimé de capteur, la carte de circuit imprimé d'actionnement et la carte de circuit imprimé de capteur étant des cartes de circuit imprimé différentes.

5. Module de commutation électrique ou électronique (100) selon la revendication 4, dans lequel une feuille isolante est prévue entre la carte de circuit imprimé d'actionnement et la carte de circuit imprimé de capteur.

6. Module de commutation électrique ou électronique (100) selon l'une quelconque des revendication 4 ou 5, dans lequel le module d'actionnement (102) et le module de capteur (103) sont raccordés de manière amovible au moyen d'un câble amovible.

7. Module de commutation électrique ou électronique (100) selon l'une quelconque des revendications précédentes, dans lequel le module d'actionnement (102) comprend en outre un processeur (111), le processeur (111) étant adapté pour envoyer un signal au dispositif électrique ou électronique afin de débuter une action par suite d'un signal reçu à partir du bouton de commutation (107) et/ou de l'au moins un capteur radar (108).

8. Module de commutation électrique ou électronique (100) selon l'une quelconque des revendications précédentes, dans lequel le module de commutation électrique ou électronique (100) est un module autonome.

9. Module de commutation électrique ou électronique (100) selon la revendication 8, dans lequel l'élément de commutation (106) est un relais qui est prévu sur le module d'actionnement (102).

10. Module de commutation électrique ou électronique (100) selon l'une quelconque des revendications précédentes, dans lequel le module de commutation électrique ou électronique (100) fait partie d'un système domotique.

11. Module de commutation électrique ou électronique (100) selon la revendication 10, dans lequel le module de commutation électrique ou électronique (100) comprend en outre une interface de communication sur le module d'actionnement (102) pour communiquer avec d'autres dispositifs dans le système domotique.

12. Module de commutation électrique ou électronique (100) selon l'une quelconque des revendications précédentes, dans lequel le module d'actionnement (102) comprend en outre une fonction de gradation ou similaire.

13. Module de commutation électrique ou électronique (100) selon l'une quelconque des revendications précédentes, dans lequel le module de capteur (103) comprend en outre au moins un capteur supplémentaire (109).

14. Module de commutation électrique ou électronique (100) selon l'une quelconque des revendications précédentes, comprenant en outre un châssis mural (112) pour fixer le module de commutation électrique ou électronique (100) à un mur, et dans lequel le boîtier (101) est raccordé au châssis mural (112) au moyen de vis, d'un mécanisme d'encliquetage ou similaire.
